# DEMANDE DE BREVET EUROPEEN

(11) **EP 3 312 036 A1**
(43) Date de publication de la demande: **25.04.2018**
(21) Numéro de dépôt: 17194748.4
(22) Date de dépôt: 04.10.2017
(51) Int. Cl.: B60K 6/48, B60K 6/485, B60W 20/00, B60W 20/15

(54) **PROCEDE DE CONTROLE DU REGIME D'UN MOTEUR THERMIQUE POUR UN VEHICULE HYBRIDE COMPORTANT UNE BOITE DE VITESSES MANUELLE**

(30) Priorité: 19.10.2016 FR 1660112
(71) Demandeur: PSA Automobiles SA, 78300 Poissy (FR)
(72) Inventeur: GALVIN, MATHIAS, 75011 PARIS (FR)

(57) **Abrégé**

L'invention concerne un procédé de contrôle du régime d'un moteur thermique (10) d'un véhicule hybride lors d'un passage manuel d'un mode de roulage tout électrique à un mode de roulage thermique sur un rapport de vitesse sélectionné par le conducteur. Le véhicule comporte une boite de vitesses manuelle (12) accouplée par un embrayage (11) au moteur thermique (10). Le procédé comporte la détection du passage manuel sur le rapport de vitesse sélectionné par le conducteur lorsque l'embrayage (11) est configuré en état ouvert, et en cas de détection du passage manuel, la commande du régime du moteur thermique (10), dès le démarrage du moteur thermique (10) et au plus tard jusqu'à la configuration de l'embrayage en état fermé, à une première consigne asservie sur une valeur d'estimation du régime de l'arbre primaire de la boite de vitesse (12).

## Description

Le domaine de l'invention concerne un procédé de contrôle du régime d'un moteur thermique de véhicule hybride lors d'un passage manuel d'un mode de roulage tout électrique vers un mode de roulage thermique sur un rapport de vitesses sélectionné par le conducteur.

Il existe de nombreuses architectures de véhicules hybrides, par exemple architectures séries, parallèles ou série-parallèles. Ces véhicules hybrides sont généralement équipés d'une boite de vitesses automatisée. Un superviseur de contrôle pilote de façon coordonnée, par des fonctions de pilotage et de stratégie énergétique, l'embrayage, le moteur thermique et le choix du rapport de vitesse en fonction de la volonté du conducteur, notamment à partir de la vitesse du véhicule, de la pédale d'accélération et de freinage.

Il est recherché aujourd'hui de proposer un véhicule hybride équipé d'une boite de vitesses commandée manuellement. Typiquement, une boite de vitesses manuelle est commandée par le conducteur au moyen d'un levier de manoeuvre permettant de sélectionner les rapports de vitesses et d'un embrayage piloté par une pédale à pied pour interrompre la transmission de couple moteur durant le passage de vitesses.

Plus spécifiquement dans le cas du véhicule hybride à boite manuelle, la demanderesse a développé un levier de manoeuvre permettant au conducteur de sélectionner un mode de roulage tout électrique, par exemple pour une position dans le couloir de sélection neutre de la grille de déplacement du levier de manoeuvre, et de sélectionner un mode de roulage thermique sur un rapport de vitesse choisi lorsque le levier est déplacé au fond du couloir de passage d'un rapport de vitesse.

Le passage d'un mode de roulage tout électrique vers un mode de roulage thermique peut être problématique car il faut s'assurer que le conducteur sélectionne un rapport de vitesse approprié à la vitesse du véhicule en sortie du mode de roulage électrique. En particulier, il faut éviter les décélérations brutales du véhicule résultant d'un engagement de rapport inadapté à la suite de la fermeture de l'embrayage. De plus, une différence importante de régime entre l'arbre moteur et l'arbre primaire de la boite de vitesse à la suite de la fermeture de l'embrayage provoque des oscillations de régime indésirables qui nuisent à l'agrément de conduite.

Les solutions de l'état de la technique proposent généralement des fonctions de pilotage automatisé pour répondre à des situations de transition, comme par exemple le document WO200651998. On connaît également le document FR2989141 proposant une interface d'aide à la conduite pour choisir les rapports de vitesses de manière à assurer un rendement efficace de la recharge d'une batterie par la machine de traction électrique.

Toutefois, ces documents ne traitent pas le problème de l'agrément de conduite lors d'un passage d'un mode de roulage tout électrique vers un mode de roulage thermique pour un véhicule à boite de vitesse manuelle sur un rapport de vitesse choisi par le conducteur. Un objectif de l'invention est d'améliorer l'agrément de reprise d'accélération ou de décélération par le conducteur durant cette phase.

Plus précisément, l'invention concerne un procédé de contrôle du régime d'un moteur thermique d'un véhicule hybride lequel comprend également une machine électrique de traction, une boite de vitesses manuelle, un embrayage accouplant le moteur thermique à la boite de vitesses et un moyen de commande d'un passage manuel d'un mode de roulage tout électrique vers un mode de roulage thermique sur un rapport de vitesse sélectionné par le conducteur. Selon l'invention, le procédé comporte les étapes successives suivantes:
- la détection du passage manuel du mode de roulage tout électrique vers le mode de roulage thermique sur le rapport de vitesse sélectionné par le conducteur lorsque l'embrayage est configuré en état ouvert,
- et, en cas de détection du passage manuel, la commande du régime du moteur thermique, dès le démarrage du moteur thermique et au plus tard jusqu'à la configuration de l'embrayage en état fermé lors du ré-embrayage, à une première consigne asservie sur une valeur d'estimation du régime de l'arbre primaire de la boite de vitesse en fin d'engagement du rapport de vitesse sélectionné.

Selon une variante, la valeur d'estimation du régime de l'arbre primaire de la boite de vitesses est calculée à partir d'une vitesse du véhicule mesurée pendant l'état ouvert de l'embrayage et du rapport de vitesse sélectionné.

Selon une variante, le moyen de commande du passage manuel est un levier de manoeuvre manipulable sur une grille de sélection des rapports de vitesse et la détection du passage manuel comporte au moins :
- la détermination d'une première position du levier correspondant à l'activation du mode de roulage tout électrique et d'une deuxième position correspondant au rapport de vitesse sélectionné par le conducteur pour le mode de roulage thermique,
- et l'élaboration d'un signal de détection du passage manuel lorsque le levier se déplace de la première position vers la deuxième position.

Selon une variante, la détection du passage manuel comporte en outre une étape de mesure de la position du levier de manoeuvre sur la grille de sélection des rapports de vitesse.

Selon une variante, la commande du régime du moteur thermique à la première consigne est maintenue active jusqu'à la détection de la configuration de l'embrayage en état fermé lors du ré-embrayage, ou jusqu'à la détection de la configuration de l'embrayage en état glissant lors du ré-embrayage.

Selon une variante, le procédé comporte en outre, en cas de détection de la configuration de l'embrayage en état fermé ou en état glissant lors du ré-embrayage, une étape de commande du couple du moteur thermique à une deuxième consigne calculée en fonction de la volonté en couple du conducteur.

Selon une variante, l'embrayage étant piloté par une pédale d'embrayage manipulable entre une position d'ouverture, une position intermédiaire de glissement et une position de fermeture pour la configuration des états respectifs de l'embrayage, la détection de la configuration de l'embrayage en état fermé ou en état glissant comporte une étape de mesure de la position de la pédale d'embrayage en position de fermeture ou de glissement.

Selon une variante, la valeur d'estimation du régime de l'arbre primaire est réduite d'une valeur de diminution de régime prédéterminée.

Selon une variante, la valeur de diminution de régime correspond à une estimation de diminution de régime introduit par un état glissant de l'embrayage lors du ré-embrayage du passage manuel.

Il est prévu selon l'invention un véhicule automobile hybride comportant un moteur thermique, une machine électrique de traction, une boite de vitesses accouplée par un embrayage au moteur thermique, un moyen de commande de changement des rapports de vitesses permettant de commander un passage manuel d'un mode de roulage tout électrique vers un mode de roulage thermique sur un rapport de vitesse sélectionné par le conducteur, le véhicule comporte en outre un superviseur exécutant le procédé de contrôle du régime du moteur thermique selon l'un quelconque des modes de réalisation précédent lors d'un passage manuel d'un mode de roulage tout électrique vers un mode de roulage thermique.

Grâce à l'invention, l'agrément de reprise en fin de passage d'un mode de roulage tout électrique vers un mode de roulage thermique est amélioré. Il évite notamment l'apparition d'oscillations de régime lors de l'accouplement de l'embrayage. Par ailleurs, lorsque l'embrayage est ouvert la régulation de régime indique au conducteur via l'indicateur de compte-tour ou du bruit moteur résultant que le choix du rapport est inadapté à la situation de roulage. Le procédé de contrôle de régime permet au conducteur de modifier son choix avant la reprise en accouplement. L'invention fournit une assistance au roulage pour un véhicule hybride à boite de vitesses commandée manuellement.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente un mode de réalisation d'un groupe motopropulseur hybride apte à exécuter le procédé selon l'invention ;
- la figure 2 représente une séquence d'exécution du procédé de contrôle du régime moteur selon l'invention ;
- La figure 3 représente deux graphiques illustrant les séquences des signaux d'état et de consignes de commande pour l'exécution du procédé selon l'invention lors d'un passage d'un mode de roulage tout électrique à un mode de roulage thermique sur le premier rapport de démultiplication.

L'invention s'applique aux groupes motopropulseurs hybrides électriques comportant une ou plusieurs machines électriques de traction indépendantes en transmission du moteur thermique et une boite de vitesses manuelle qui est pilotée par un moyen de commande permettant au conducteur de choisir manuellement le rapport de vitesses à sélectionner. Par machine électrique de traction indépendante on entend les machines électriques de traction montées en aval de la boite de vitesses en considérant le sens de transmission de couple moteur allant du moteur thermique vers les roues, ou les machines électriques montées sur un train de roues distinct du train de roues motorisé par le moteur thermique. Il s'agit des machines électriques de traction dites machines électriques sur pont, ou machines électriques roues ou machines électriques de train de roues, comme cela est courant sur un train de roues arrière. On entend par un mode de roulage tout électrique lorsqu'uniquement la ou les machines électriques de traction participent seules à mouvoir le véhicule et par un mode de roulage thermique lorsqu'au moins le moteur thermique participe à mouvoir le véhicule.

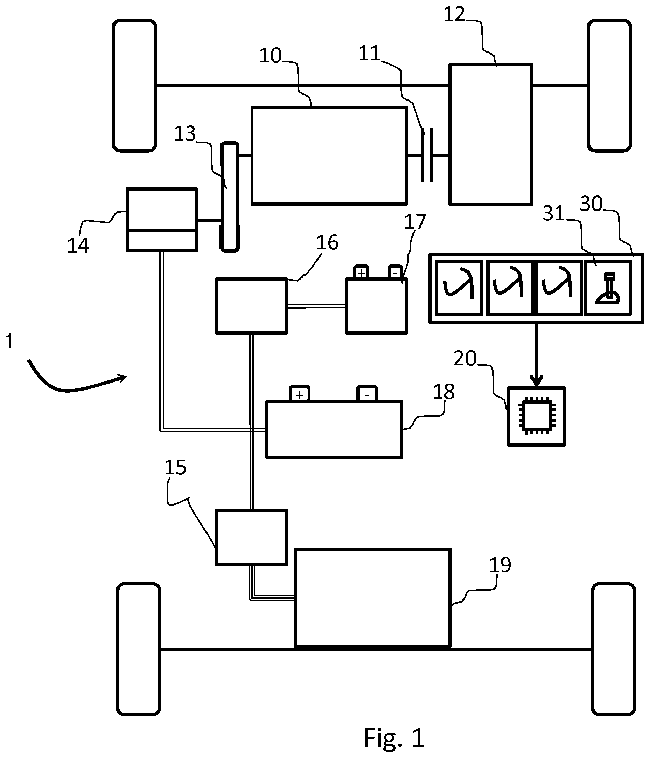

La figure 1 représente un mode de réalisation d'un groupe motopropulseur hybride électrique 1 de véhicule automobile pouvant exécuter le procédé de contrôle de régime du moteur thermique selon l'invention. Le groupe motopropulseur hybride 1 possède la spécificité d'être piloté par une boite de vitesses manuelle et de permettre le choix du roulage tout électrique et le roulage thermique au moyen du dispositif de commande des rapports de vitesses. Comme on le verra plus précisément dans la suite de la description, un rapport électrique avant et un rapport électrique arrière qui sont des modes de roulage entièrement électriques sont sélectionnables par le conducteur. Le groupe motopropulseur 1 comporte un moteur thermique 10, un embrayage 11 et une boite de vitesse manuelle 12 qui sont liés en transmission au train de roues avant du véhicule. Le train de roues avant comprend également un différentiel non représenté sur la figure 1 entre la boite de vitesses 12 et les roues.

Le moteur thermique 10 fournit un couple moteur à destination des roues du train avant dans un mode de roulage thermique. Le moteur thermique 10 est pilotable en consigne de couple au vilebrequin et en consigne de régime de rotation du vilebrequin. Le groupe motopropulseur 1 comprend un superviseur de contrôle 20 exécutant des fonctions de pilotage pour coordonner l'ensemble des éléments du groupe motopropulseur 1. Pour la commande du moteur thermique 10 des fonctions de pilotage élaborent la consigne de couple ainsi qu'une consigne de démarrage et d'arrêt et dans certaine situation de vie une consigne de régime. Un alterno-démarreur 14 est apte à démarrer le moteur thermique 10 pendant le roulage du véhicule, notamment lors d'un passage d'un mode de roulage tout électrique vers un passage à un mode de roulage thermique.

Par exemple, une première fonction de pilotage d'interprétation de la volonté en couple du conducteur élabore une consigne de couple moteur en fonction de paramètres d'accélération ou de freinage provenant des dispositifs de commande de la vitesse du véhicule d'une interface de pilotage 30 de l'habitacle, par exemple à partir d'une mesure de la position d'une pédale d'accélération ou d'une pédale de freinage par un capteur proportionnel et de la mesure du régime moteur, ou bien de la vitesse d'enfoncement ou de l'accélération d'enfoncement des pédales. Une deuxième fonction de pilotage est un régulateur de régime moteur. En fonction du régime mesuré du moteur thermique et d'une valeur d'asservissement de régime moteur, cette deuxième fonction de pilotage du moteur thermique élabore une consigne de couple. Dans le cadre de l'exécution du procédé de contrôle du régime moteur pour le passage manuel du mode de roulage tout électrique vers le mode de roulage thermique, la valeur d'asservissement en régime moteur est déterminée par le superviseur 20 par une troisième fonction de pilotage en fonction de divers paramètres de roulage qui seront décrits plus précisément dans la suite de la description.

L'interface de pilotage 30 comporte l'ensemble des dispositifs de commande de l'habitacle permettant à l'utilisateur de transmettre une instruction de pilotage, notamment la pédale d'accélération, la pédale de frein, la pédale de débrayage, un moyen de changement 31 de rapport de vitesses à levier de manoeuvre.

L'embrayage 11 est apte à solidariser sélectivement en rotation le vilebrequin du moteur thermique 10 et l'arbre primaire de la boite de vitesses 12 pour transmettre un couple moteur aux roues du train avant et pour interrompre la transmission de couple pour permettre temporairement un changement de rapport de vitesse dans un mode de roulage thermique. L'embrayage 11 est piloté par le conducteur au moyen d'un dispositif de commande manuel pour opérer un débrayage (la phase de désaccouplement) et un ré-embrayage (la phase d'accouplement), par exemple au moyen d'un dispositif de commande à pédale de pied faisant partie de l'interface de pilotage 30 dans l'habitacle du véhicule.

On ajoutera que l'embrayage 11 est configurable dans trois états détectables par le superviseur 20 : un état fermé pour lequel le vilebrequin du moteur thermique 10 et l'arbre primaire sont solidaires en rotation, un état glissant pour lequel le vilebrequin du moteur thermique 10 et l'arbre primaire sont partiellement solidaires en rotation et un état ouvert pour lequel le vilebrequin du moteur thermique 10 et l'arbre primaire ne sont pas accouplés. Par exemple, ces trois états de l'embrayage sont détectables par un capteur proportionnel de l'interface 30 installé sur le dispositif de commande à pédale de l'embrayage 11 pouvant mesurer une position d'ouverture, une position intermédiaire de glissement et une position de fermeture respectivement aux trois états de l'embrayage.

La boite de vitesses 12 comprend un arbre primaire apte à être couplé sélectivement par des paires de pignons à un arbre secondaire relié au différentiel du train de roues. Les paires de pignons définissent les démultiplications des rapports de vitesses entre l'arbre primaire et l'arbre secondaire. De type connu, la boite de vitesses 12 comprend des moyens d'accouplement des pignons fous avec leur arbre respectif pour opérer une transmission de couple entre l'arbre primaire et l'arbre secondaire selon un rapport de démultiplication voulu. Dans ce mode de réalisation, la boite de vitesses 12 comporte par exemple six rapports de vitesses. Les moyens d'accouplements sont commandés par un moyen de commande manuel 31 des rapports de vitesses faisant partie de l'interface de pilotage 30 dans l'habitacle du véhicule, par exemple un levier de manoeuvre déplaçable par le conducteur dans une grille de sélection des rapports. De type connu, la grille présente un couloir de sélection et trois couloirs de passage des rapports de vitesses perpendiculaires au couloir de sélection. Lorsque le conducteur sélectionne un rapport de vitesse au moyen du levier de manoeuvre, un moyen d'accouplement permet de synchroniser le régime de rotation de l'arbre primaire et de l'arbre secondaire et d'engager la transmission de couple via une paire de pignon du rapport de vitesses sélectionné. On dit que le rapport de vitesse est engagé lorsque l'arbre primaire et l'arbre secondaire sont accouplés.

Lors du roulage, en position neutre du levier de manoeuvre, l'arbre primaire n'est pas accouplé à l'arbre secondaire et n'est donc pas en fonctionnement tournant. Lorsqu'un rapport de vitesse est engagé, l'arbre primaire est accouplé à l'arbre secondaire et est donc en fonctionnement tournant à un régime de rotation qui dépend de la vitesse du véhicule et de la démultiplication du rapport de vitesse engagé. On notera que le superviseur 20 est apte à déterminer une valeur d'estimation du régime de l'arbre primaire en fonction de la vitesse du véhicule et du rapport de vitesses engagé.

Par ailleurs, l'engagement d'un rapport de vitesse est détectable par le superviseur 20, par exemple au moyen d'un capteur proportionnel installé sur le moyen de commande 31 des rapports de vitesse qui permet de détecter la position du levier sur la grille. Dans un mode de réalisation, il est envisageable que le superviseur 20 puisse détecter l'engagement d'un rapport de vitesses dès l'entrée du levier de manoeuvre dans le couloir de passage dudit rapport de vitesse.

Par ailleurs, le groupe motopropulseur 1 comporte en outre une machine électrique de traction 19 montée sur le train de roues arrière. Un réducteur et un crabot (non représentés sur la figure 1) relient en transmission le rotor de la machine de traction 19 et les roues. La machine électrique de traction 19 est apte à fournir un couple moteur aux roues en puisant de l'énergie dans une batterie haute tension 18 ou dans une phase de freinage est apte à recharger la batterie haute tension 18. On notera que la machine électrique de traction 19 est indépendante en transmission de l'arbre primaire de la boite de vitesse 12 et du moteur thermique 10. Il est envisageable dans d'autres variantes du groupe motopropulseur que la machine de traction 19 soit positionnée en aval de la boite de vitesse sur le train de roues avant, montée sur pont ou en roue.

De plus, le mode de roulage tout électrique est actionnable par le conducteur au moyen du moyen de commande 31 des rapports de vitesses de l'interface 30 en positionnant le levier de manoeuvre dans une position attribuée à un rapport électrique. Par exemple, le mode de roulage tout électrique en marche avant ou arrière est activé lorsque le levier entre dans une position spécifique dans le couloir de sélection neutre, en butée gauche ou droite. Le rotor de la machine de traction électrique 19 est en rotation pour répondre à la volonté conducteur, tandis que l'arbre primaire de la boite de vitesse 12 n'est pas en fonctionnement tournant du fait que le levier de manoeuvre n'enclenche pas une position d'engagement d'un rapport de vitesse thermique.

Par ailleurs, le groupe motopropulseur comporte une batterie haute tension 18 pouvant présenter une tension à ses bornes d'environ 48 Volts jusqu'à plusieurs centaines de Volts et connectée électriquement via un onduleur 15 à la machine électrique de traction 19. L'alterno-démarreur 14 monté en façade du moteur thermique 10 possède également un onduleur et est relié électriquement à la batterie haute tension. L'alterno-démarreur 14 est apte à prélever du couple moteur au moteur thermique via la façade 13 pour recharger la batterie haute tension 18. De plus, une batterie basse tension 17, présentant typiquement une tension à ses bornes d'environ 12 Volts, alimente un réseau de bord et est connectée électriquement à la batterie haute tension 18 par l'intermédiaire d'un convertisseur de tension 16.

Le superviseur de contrôle 20 est un calculateur à circuit intégré couplé à des mémoires et destiné à exécuter des fonctions de pilotage pour le fonctionnement du groupe motopropulseur 1. En particulier, les mémoires enregistrent une fonction de pilotage contenant les instructions d'exécution du procédé de contrôle selon l'invention. Le superviseur 20 est configuré pour exécuter le procédé de contrôle de régime du moteur thermique 10 lors d'un passage manuel d'un mode de roulage tout électrique vers un mode de roulage thermique sur un rapport de vitesse sélectionné par le conducteur. En outre, le superviseur 20 comporte des moyens pour mesurer des paramètres provenant des capteurs du groupe motopropulseur 1, notamment la vitesse du véhicule mesurable à partir d'un dispositif de freinage du véhicule, le régime du moteur thermique 10 à partir du calculateur du moteur thermique 10, les positions des pédales d'accélération et de débrayage et les positions du levier de manoeuvre de changement de rapport de vitesse. Le superviseur 20 comporte des moyens de détection du passage manuel du mode de roulage tout électrique vers le mode de roulage thermique sur le rapport de vitesse sélectionné par le conducteur. Le superviseur est apte à détecter les positions et les mouvements du levier sur la grille quel que soit l'état de l'embrayage.

De plus, le superviseur 20 comporte des moyens de calcul pour élaborer des consignes à destination des organes du groupe motopropulseur 1, notamment les consignes de démarrage et d'arrêt du moteur thermique 10, la consigne de couple, la consigne de régime moteur, la consigne d'activation du régulateur de régime moteur, etc. Dans le cadre de l'invention, les moyens de calcul sont aptes à calculer une consigne d'asservissement du régime moteur à partir d'une valeur d'estimation du régime de l'arbre primaire de la boite de vitesses en fin d'engagement du rapport de vitesse sélectionné.

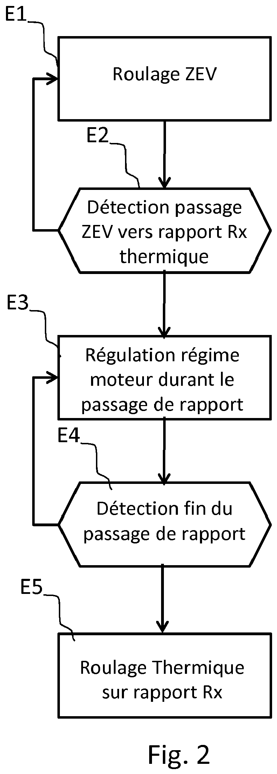

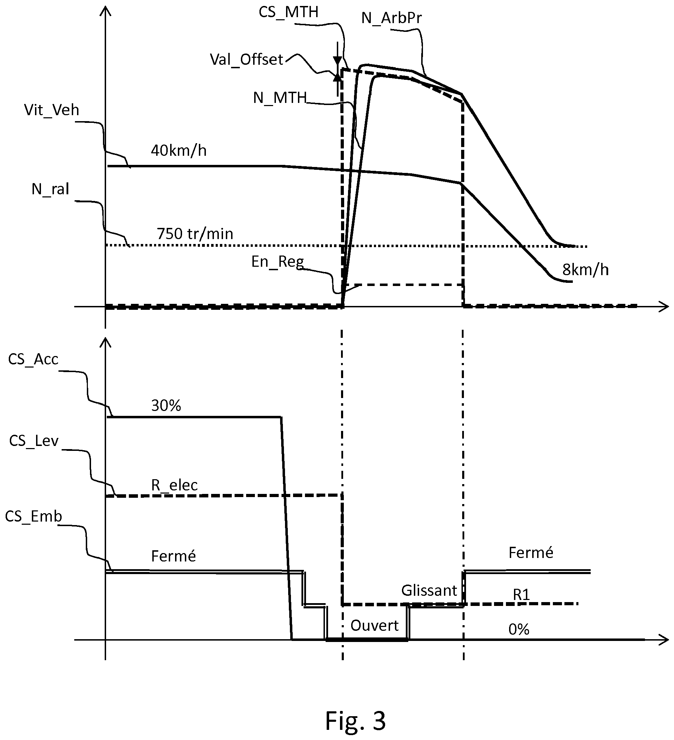

La figure 2 représente le procédé de contrôle du régime du moteur thermique 10 lors de la commande du passage manuel d'un mode de roulage tout électrique vers un mode de roulage thermique sur un rapport de vitesse sélectionné par le conducteur. Le procédé selon l'invention est exécuté par une fonction de régulation du régime du moteur thermique 10 permettant d'améliorer l'agrément de passage du mode de roulage tout électrique vers le mode de roulage thermique. Par ailleurs, la description du procédé de contrôle sera accompagnée de la figure 3 qui contient deux graphiques représentant des séquences des paramètres d'états relevés par le superviseur 20 et des consignes émises pour l'exécution du procédé.

On précise que le procédé tel que décrit en figure 2 s'applique pour le groupe motopropulseur de la figure 1 ainsi que pour les variantes de groupe motopropulseur telles que mentionnées précédemment dans la description.

En figure 3, le graphique supérieur décrit la séquence de paramètres d'états du groupe motopropulseur pour la réalisation du passage manuel du mode de roulage tout électrique vers le mode de roulage thermique sur le premier rapport de vitesse. La barre horizontale en pointillée N_ral représente la valeur de référence du régime moteur au ralenti, c'est à dire environ 750tr/min. La courbe Vit_Veh représente la vitesse du véhicule lors du passage de rapport de vitesse. Un paramètre d'état booléen En_Reg représente un signal d'activation de la commande de régulation de régime du moteur thermique 10 durant le passage manuel de rapport. La courbe CS_MTH en pointillée est la consigne de régime du moteur thermique 10 générée par la fonction de régulation de régime du procédé de contrôle selon l'invention. La courbe N_ArbPr en trait plein représente le régime de l'arbre primaire durant le passage de rapport. La courbe N_MTH en trait plein représente la valeur du régime du vilebrequin du moteur thermique 10 en réponse à la consigne CS_MTH. La double flèche Val_Offset représente la valeur de diminution de régime prédéterminée soustraite de la valeur d'estimation du régime de l'arbre primaire N_ArbPr en fin d'engagement du premier rapport de vitesses.

Sur le graphique inférieur de la figure 3, la courbe CS_Emb décrit le signal d'état de la consigne de l'embrayage 11 pouvant être à l'état fermé, à l'état glissant et à l'état ouvert. La courbe CS_Lev représente le signal d'état de la consigne du levier de manoeuvre de changement de rapport de vitesses. La courbe CS_Acc représente le signal d'état de la consigne de la pédale d'accélération en pourcentage d'enfoncement de la course de la pédale.

Dans une première phase du procédé, à une étape E1 le véhicule circule dans un mode de roulage tout électrique. Seule la machine électrique de traction 19 fournit le couple moteur aux roues qui déplace le véhicule. La consigne CS_Lev est positionnée sur le rapport électrique R_Elec, la consigne CS_Acc est positionnée à 30% et la consigne CS_Emb est positionnée sur l'état fermé. Le moteur thermique 10 est en état d'arrêt et son régime N_MTH indique une valeur nulle. Aucun rapport de vitesse de la boite de vitesses 12 n'est engagé. On notera que le régime de l'arbre primaire N_ArbPr est nul car il n'est pas accouplé à l'arbre secondaire. La vitesse du véhicule est à une valeur d'environ 40km/h.

A une étape E2, le procédé détecte le passage manuel du mode de roulage tout électrique vers le mode de roulage thermique sur le rapport de vitesse sélectionné par le conducteur lorsque l'embrayage 11 est configuré en état ouvert. La détection est active au moins lorsqu'une première condition correspondant à l'engagement du rapport de vitesses est remplie. Dans ce mode de réalisation, la détection E2 du passage manuel comporte une étape de détermination d'une première position R_elec du levier correspondant au rapport électrique et d'une deuxième position correspondant au rapport de vitesse sélectionné par le conducteur pour le mode de roulage thermique, et une étape d'élaboration du signal de détection (CS_LEV) du passage manuel lorsque le levier de manoeuvre se déplace de la première position vers la deuxième position.- La condition est remplie dès que le rapport est en début d'engagement, par exemple lorsque le levier de manoeuvre entre dans le couloir de passage du rapport, lorsque le levier a atteint la position de fond de couloir du rapport, ou lorsque le levier a atteint une position intermédiaire entre l'entrée du couloir de passage et le fond de couloir. La détection du passage manuel comporte la mesure de la position du levier de manoeuvre sur la grille de sélection des rapports de vitesse à partir d'un capteur proportionnel de la grille du moyen de commande 31 ou à partir de la détermination d'un signal d'état du superviseur. Comme on le voit sur la figure 3, la consigne CS_Lev bascule de la position du mode de roulage tout électrique R_elec vers la position du premier rapport de vitesse R1.

On ajoutera que le passage manuel du mode de roulage tout électrique vers le mode de roulage thermique sur le rapport de vitesse sélectionné par le conducteur nécessite nécessairement le débrayage commandé préalablement par le conducteur. Comme on le voit sur la figure 3 par la consigne CS_Emb, l'embrayage 11 est configuré d'un état fermé vers un état ouvert pour permettre le passage de rapport. Le superviseur 20 est apte à détecter cet événement comme cela a déjà été mentionné lors de la description du groupe motopropulseur, de préférence par une étape de mesure de la position de la pédale d'embrayage. Dans une variante, la détection du débrayage est une deuxième condition de détection du passage manuel du mode de roulage tout électrique vers le mode de roulage thermique.

De plus, lorsque le rapport de vitesse est engagé, le superviseur 20 commande le démarrage du moteur thermique 10. Le démarrage du moteur thermique 10 s'effectue tout d'abord en pilotant l'alterno-démarreur afin de relancer le moteur thermique puis en pilotant le moteur thermique en injectant du carburant afin qu'il atteigne une valeur de seuil de régime, dit régime de ralenti. Le moteur thermique est dit « démarré » une fois que le régime a atteint le régime de ralenti. Dans une variante, la détection de démarrage du moteur thermique 10 est une troisième condition de détection E2 du passage manuel du mode de roulage tout électrique vers le mode de roulage thermique. Cette condition est remplie lorsque le régime moteur a atteint la valeur du régime de ralenti N_ral.

Ainsi, en cas de détection du passage manuel, le procédé comporte une étape de commande E3 du régime du moteur thermique 10, dès le démarrage du moteur thermique et au plus tard jusqu'à la configuration de l'embrayage en état fermé lors du ré-embrayage, à la première consigne CS_MTH asservie sur une valeur d'estimation du régime de l'arbre primaire N_ArbPr de la boite de vitesse 12 en fin d'engagement du rapport de vitesse sélectionné. Le procédé met fin à la commande E3 à un instant compris dans la phase de ré-embrayage. De préférence, la valeur d'estimation du régime de l'arbre primaire de la boite de vitesses 12 est calculée à partir de la vitesse du véhicule mesurée lorsque l'embrayage 11 est configuré en état ouvert et du rapport de vitesse sélectionné. Un rapport de démultiplication est attribué au rapport de vitesse sélectionné, et à partir du rapport de démultiplication et de la vitesse mesurée, le superviseur 20 calcule une estimation du régime de l'arbre primaire sur laquelle asservir le moteur thermique. Ces paramètres sont connus du superviseur 20 comme cela a déjà été mentionné précédemment. La fin d'engagement du rapport de vitesse sélectionné correspond au moment lorsque l'accouplement entre l'arbre primaire et l'arbre secondaire de la boite de vitesses 12 est effectif.

Comme on le voit sur la figure 3, à l'instant de basculement de la consigne CS_Lev, le signal d'activation En_Reg devient actif indiquant la mise en action de la régulation de régime du procédé. La première consigne CS_MTH est asservie sur la valeur d'estimation du régime de l'arbre primaire N_ArbPr, calculée en fonction de la vitesse Vit_Veh et de la démultiplication du premier rapport. On notera que la valeur CS_MTH est réduite de la valeur de diminution de régime moteur Val_Offset prédéterminée. De préférence, la valeur de diminution de régime Val_Offset correspond à une estimation de diminution de régime introduit par un état glissant de l'embrayage lors du ré-embrayage du passage manuel. L'introduction de la valeur de diminution a pour effet d'appliquer une baisse de vitesse attendue en fin de passage de rapport comme cela est le cas lorsque le conducteur maintient son pied sur l'embrayage en état de glissement lors du ré-embrayage. L'agrément de conduite est ainsi amélioré. Sans l'application de la valeur de diminution, il résulterait une sensation d'accélération générée par le régulateur et non désirée par le conducteur. Toutefois, l'application de la valeur de diminution n'est pas obligatoire.

A cet instant, le régime réel de l'arbre primaire de la boite de vitesses 12 est encore nul car la synchronisation et l'engagement du premier rapport ne sont pas encore terminés. L'invention permet toutefois de piloter le moteur thermique 10 dès qu'il atteint le régime de ralenti de la phase de démarrage sur la valeur d'estimation du régime de l'arbre primaire de façon anticipée afin que le régime du moteur thermique 10 atteigne au plus vite son régime avant la fin du ré-embrayage.

Ainsi, dés son démarrage, le moteur thermique 10 est mis en fonctionnement en régulation de régime à un régime similaire à celui de l'arbre primaire de la boite de vitesses 12 prévu en fin d'engagement du rapport de sorte que lors de la fermeture de l'embrayage 11 l'accouplement des deux arbres se fassent sans oscillations de régime. L'agrément de conduite est ainsi amélioré. On notera que le pilotage du moteur thermique 10 ne comprend pas de phase préalable de commande au régime de ralenti.

Dans une variante, il est envisageable que la valeur d'estimation du régime de l'arbre primaire corresponde à une valeur mesurée du régime de l'arbre primaire. Dans ce cas, la consigne CS_MTH est asservie une fois que l'accouplement entre l'arbre primaire et l'arbre secondaire est effectif.

De plus, le fait que le moteur thermique 10 soit piloté à la première consigne CS_MTH durant le passage manuel présente un deuxième avantage. En cas de sélection par le conducteur d'un rapport de vitesses inadapté à la vitesse du véhicule, par exemple un rapport trop faible ou trop élevé, le régime moteur sera commandé avant la fin du ré-embrayage à un régime trop élevé ou un régime trop faible au regard de la situation de roulage. Le bruit du moteur, les vibrations et le compte-tours de l'interface 30 indiqueront alors au conducteur que le choix du rapport est inadapté. Celui-ci pourra alors intervenir tant que l'embrayage 11 est encore en état ouvert pour modifier son choix. Cependant, si le conducteur persiste dans son choix de rapport, la synchronisation du régime moteur et du régime de l'arbre primaire avant la fermeture de l'embrayage 11 évitera les oscillations lors de l'accouplement. On préserve ainsi le groupe motopropulseur d'une usure de mauvais fonctionnement.

On rappelle que la première consigne CS_MTH est une consigne de régulation temporaire, durant le passage du roulage électrique au roulage thermique, du régime du moteur thermique 10 en fonction de la vitesse du véhicule, indépendamment de la volonté de couple du conducteur. Toutefois, il est envisageable que la commande E3 de la première consigne CS_MTH soit conditionnée à des vérifications entre la consigne de couple issue de la fonction de la volonté du conducteur et la consigne de couple issue de la régulation de régime. En particulier, en cas de détection que la consigne de couple de la volonté du conducteur est supérieure à la consigne de couple de la régulation de régime, le superviseur 20 commande le couple moteur selon une deuxième consigne provenant de la fonction de pilotage de la volonté conducteur (consigne non représentée en figure 3). Le choix par le superviseur entre la première consigne CS_MTH issue de la fonction de régulation pour l'agrément de passage et la deuxième consigne issue de la fonction de la volonté du conducteur est imposé par la valeur maximale de la consigne de couple entre les deux fonctions.

A une étape E4, le conducteur lève le pied de la pédale d'embrayage, le signal de la consigne CS_Emb bascule de l'état ouvert à l'état fermé en passant l'état glissant temporairement. Dans ce mode de réalisation du procédé, à l'instant de passage à l'état fermé, le signal d'état booléen En_Reg est mis à zéro pour désactiver l'asservissement de la consigne CS_MTH sur la valeur d'estimation de régime de l'arbre primaire. On notera qu'à cet instant le régime mesuré du moteur thermique N_MTH est sensiblement similaire du régime de l'arbre primaire N_ArbPr. Le procédé évite donc les oscillations de régime lors de la fermeture de l'embrayage 11.

Ensuite, à une étape E5, en cas de la détection de la configuration de l'embrayage en état fermé lors du ré-embrayage, de préférence par une étape de mesure de la position de la pédale d'embrayage, c'est à dire lorsque CS_Emb bascule à l'état fermé, le procédé comporte une étape de commande E5 du couple du moteur thermique 10 à la deuxième consigne de couple calculée en fonction de la volonté en couple du conducteur. Comme cela a été décrit précédemment dans la description, la volonté en couple du conducteur est calculée en fonction de la position de la pédale d'accélération, de la vitesse d'enfoncement, ou de l'accélération de la pédale d'accélération. Comme on le voit sur la figure 3, la vitesse Vit_Veh baisse jusqu'à 8km/h et le régime N_MTH et N_ArbPr diminuent jusqu'au niveau proche du ralenti. Les deux régimes sont égaux car les deux arbres sont alors accouplés.

Il est envisageable que la transition depuis le couple moteur résultant de la première consigne de régulation en régime moteur vers le couple moteur résultant de la deuxième consigne issue de la fonction de la volonté du conducteur soit opérée graduellement sur une durée prédéterminée en fonction de l'écart de couple résultant des première et deuxième consignes. Dans une variante, la transition de couple entre la première consigne et la deuxième consigne est exécutée immédiatement, sans transition temporelle graduelle, afin de répondre au plus vite à la volonté du conducteur au détriment de l'agrément.

Dans une variante du procédé, la commande du régime du moteur thermique à la première consigne CS_MTH est maintenue active jusqu'à la détection de la configuration de l'embrayage en état glissant lors du ré-embrayage, de préférence par une étape de mesure de la position de la pédale d'embrayage. Cela permet de piloter plus tôt le moteur thermique sur la volonté du conducteur.

## Revendications

1. Procédé de contrôle du régime d'un moteur thermique (10) d'un véhicule hybride lequel comprend également une machine électrique de traction (19), une boite de vitesses manuelle (12), un embrayage (11) accouplant le moteur thermique (10) à la boite de vitesses (12) et un moyen de commande (31) d'un passage manuel d'un mode de roulage tout électrique vers un mode de roulage thermique sur un rapport de vitesse sélectionné par le conducteur, le procédé étant **caractérisé en ce qu'**il comporte les étapes successives suivantes:
- la détection (E2) du passage manuel du mode de roulage tout électrique vers le mode de roulage thermique sur le rapport de vitesse sélectionné par le conducteur lorsque l'embrayage (11) est configuré en état ouvert,
- et, en cas de détection du passage manuel, la commande (E3) du régime du moteur thermique (10), dès le démarrage du moteur thermique et au plus tard jusqu'à la configuration de l'embrayage en état fermé lors du ré-embrayage, à une première consigne (CS_MTH) asservie sur une valeur d'estimation du régime de l'arbre primaire de la boite de vitesses (12) en fin d'engagement du rapport de vitesse sélectionné.

2. Procédé selon la revendication 1, **caractérisé en ce que** la valeur d'estimation du régime de l'arbre primaire de la boite de vitesses (12) est calculée à partir d'une vitesse du véhicule mesurée pendant l'état ouvert de l'embrayage (11) et du rapport de vitesse sélectionné.

3. Procédé selon la revendication 1 ou 2, le moyen de commande (31) du passage manuel est un levier de manoeuvre manipulable sur une grille de sélection des rapports de vitesse, **caractérisé en ce que** la détection (E2) du passage manuel comporte au moins :
- la détermination d'une première position (R_elec) du levier correspondant à l'activation du mode de roulage tout électrique et d'une deuxième position (R1) correspondant au rapport de vitesse sélectionné par le conducteur pour le mode de roulage thermique,
- et l'élaboration d'un signal de détection (CS_Lev) du passage manuel lorsque le levier se déplace de la première position vers la deuxième position.

4. Procédé selon la revendication 3, **caractérisé en ce que** la détection (E2) du passage manuel comporte en outre une étape de mesure de la position du levier de manoeuvre sur la grille de sélection des rapports de vitesse.

5. Procédé selon l'une quelconque des revendications 1 à 4, **caractérisé en ce que** la commande (E3) du régime du moteur thermique (10) à la première consigne (CS_MTH) est maintenue active jusqu'à la détection de la configuration de l'embrayage (11) en état fermé ou en état glissant lors du ré-embrayage.

6. Procédé selon la revendication 5, **caractérisé en ce qu'**il comporte en outre, en cas de détection (E4) de la configuration de l'embrayage en état fermé ou en état glissant lors du ré-embrayage, une étape de commande (E5) du couple du moteur thermique (10) à une deuxième consigne calculée en fonction de la volonté en couple du conducteur.

7. Procédé selon la revendication 5 ou 6, l'embrayage (11) étant piloté par une pédale d'embrayage manipulable entre une position d'ouverture, une position intermédiaire de glissement et une position de fermeture pour la configuration des états respectifs de l'embrayage, **caractérisé en ce que** la détection de la configuration de l'embrayage en état fermé ou en état glissant comporte une étape de mesure de la position de la pédale d'embrayage en position de fermeture ou de glissement.

8. Procédé selon l'une quelconque des revendications 1 à 7, **caractérisé en ce que** la valeur d'estimation du régime de l'arbre primaire est réduite d'une valeur de diminution de régime prédéterminée (Val_Offset).

9. Procédé selon la revendication 8, **caractérisé en ce que** la valeur de diminution de régime (Val_Offset) correspond à une estimation de diminution de régime introduit par un état glissant de l'embrayage lors du ré-embrayage du passage manuel.

10. Véhicule automobile hybride comportant un moteur thermique (10), une machine électrique de traction (19), une boite de vitesses (12) accouplée par un embrayage (11) au moteur thermique (10), un moyen de commande de changement des rapports de vitesses permettant de commander un passage manuel d'un mode de roulage tout électrique vers un mode de roulage thermique sur un rapport de vitesse sélectionné par le conducteur, **caractérisé en ce qu'**il comporte en outre un superviseur (20) exécutant le procédé de contrôle du régime du moteur thermique (10) selon l'une quelconque des revendications précédentes lors d'un passage manuel d'un mode de roulage tout électrique vers un mode de roulage thermique.
